# FASCICULE DE BREVET EUROPEEN

(11) **EP 0 453 375 B1**
(45) Date de publication et mention de la délivrance du brevet: **05.04.1995**
(21) Numéro de dépôt: 91401054.1
(22) Date de dépôt: 19.04.1991
(51) Int. Cl.: C13F 1/02

(54) **Procédé et installation pour la production en continu de cristaux de sucre**
Verfahren und Vorrichtung zur kontinuierlichen Herstellung von Zuckerkristallen
Process and apparatus for the continuous production of sugar crystals

(30) Priorité: 20.04.1990 FR 9005045
(43) Date de publication de la demande: 23.10.1991
(73) Titulaire: F C B, 93100 Montreuil Cédex (FR)
(72) Inventeur: De Cremoux, Jacques, F-59260 Lille-Hellemmes (FR)
(74) Mandataire: Fontanié, Etienne

(56) Documents cités:
- EP-A- 0 128 078
- WO-A-84/01584
- FR-A- 2 109 397
- GB-A- 1 163 694

## Description

La présente invention concerne la production en continu de cristaux de sucre à partir de sirops suivant le procédé comportant une première étape au cours de laquelle le maintien en sursaturation de la liqueur-mère, permettant la cristallisation, est obtenu par évaporation grâce à un apport de calories, et une seconde étape de cristallisation par refroidissement.

Dans ce procédé, la première étape est mise en oeuvre dans un appareil constitué par une cuve divisée en plusieurs compartiments ou cellules munis de moyens de chauffage et traversés successivement par la masse-cuite constituée dans le premier compartiment par ajout d'un magma d'ensemencement au sirop et nourrie dans les autres compartiments par des apports dosés de sirop. Les apports de calories et de sirop dans chaque compartiment sont réglés de façon à maintenir la liqueur-mère en état de sursaturation et permettre le grossissement progressif des cristaux de l'entrée à la sortie de l'appareil. La cristallisation du sucre et l'évaporation de l'eau provoquent une augmentation progressive de la teneur en matières sèches (Brix) et, par conséquent, de la viscosité de la masse cuite. Suivant le procédé classique, cette première étape est conduite pour obtenir une masse-cuite ayant une teneur en cristaux aussi élevée que possible et dont la viscosité n'est limitée que par les possibilités de soutirage et de transport vers le malaxeur. A cause de la viscosité élevée de la masse-cuite dans le dernier compartiment, les échanges thermiques avec les éléments chauffants sont faibles et il est nécessaire d'augmenter la surface de ces derniers et/ou d'utiliser un vide plus poussé dans l'appareil de cristallisation.

La seconde étape du procédé est mise en oeuvre dans un malaxeur où la masse cuite est refroidie lentement pour que se poursuivent la cristallisation et le grossissement des cristaux, en mettant à profit la diminution de la solubilité du sucre avec la température. Ces malaxeurs sont généralement munis de pales et d'éléments d'échange thermique parcourus par de l'eau froide. On utilise également des malaxeurs sous vide dans lesquels le refroidissement est provoqué par évaporation par détente.

Le document EP.A.0128078 a pour objet un procédé de production d'un magma d'ensemencement pour la cristallisation du sucre suivant le procédé concerné par l'invention, selon lequel du jus sucré est concentré par évaporation en deux étapes : une première étape au cours de laquelle le jus est concentré par apport de chaleur extérieure et une seconde étape au cours de laquelle l'évaporation est produite par détente. Le magma produit est introduit dans la première d'une série de cellules d'un appareil de cristallisation à marche continue où la masse cuite est produite de façon classique.

Le but de la présente invention est de permettre de diminuer la teneur en matières sèches et, par conséquent, la viscosité de la masse cuite produite au cours de la première étape, sans diminuer le rendement global du procédé et, par suite, augmenter la productivité de l'appareil de cristallisation et améliorer les conditions d'exploitation de l'atelier de cristallisation.

Le procédé objet de la présente invention est caractérisé en ce que la masse-cuite produite au cours de la première étape a une teneur en matières sèches et un coefficient de sursaturation faibles par rapport aux valeurs habituelles et en ce qu'elle est soumise à une détente provoquant l'évaporation rapide d'un certain volume d'eau et une augmentation notable de la sursaturation avant d'être soumise à la seconde étape de cristallisation par refroidissement. Entre la première et la seconde étapes, la masse-cuite passe dans un ballon fermé où règne un vide supérieur (pression inférieure) à celui qui règne dans l'appareil ou le compartiment de l'appareil d'où est extraite la masse-cuite, le temps de séjour de la masse-cuite dans ledit ballon étant de l'ordre de 1 minute ou moins. L'évaporation par détente et le refroidissement peuvent être réalisées en plusieurs étapes.

L'invention a également pour objet une installation pour la mise en oeuvre de ce procédé comportant, outre un appareil de cristallisation par évaporation et un malaxeur classiques, un ballon fermé dont l'entrée est reliée à l'appareil de cristallisation et dont la sortie est reliée à l'entrée du malaxeur, et des moyens pour maintenir dans ledit ballon une pression inférieure à la pression qui règne, en fonctionnement, dans l'appareil de cristallisation ou dans le dernier compartiment de cet appareil.

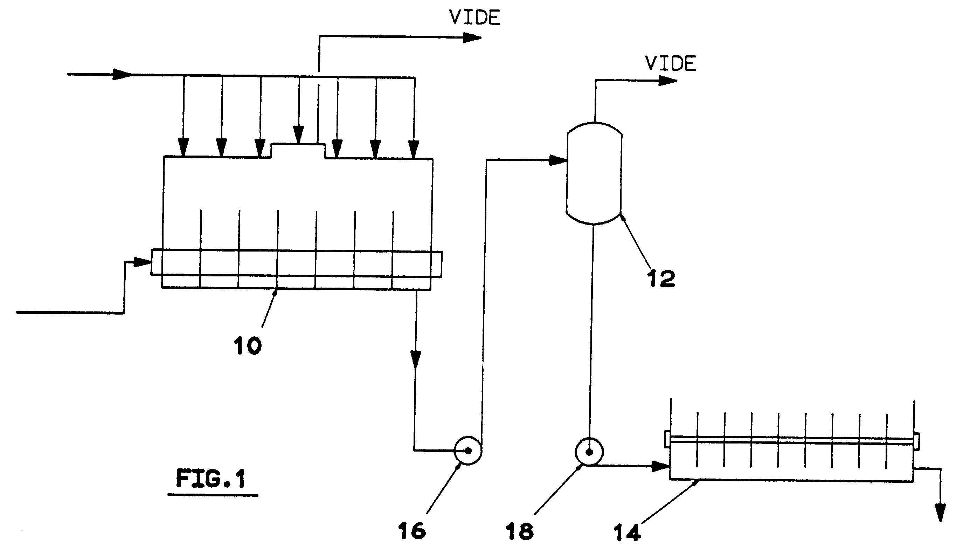

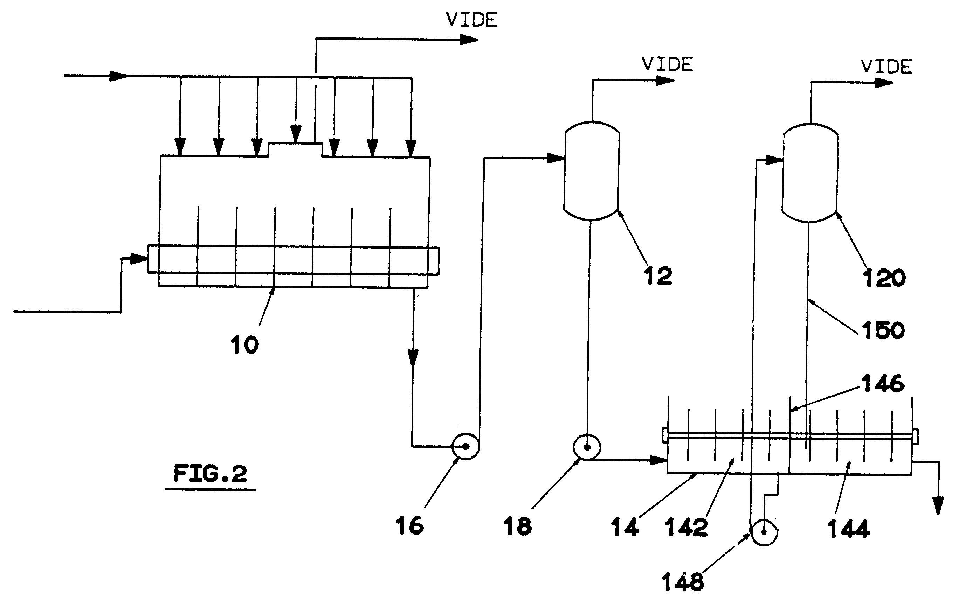

D'autres caractéristiques de l'invention apparaîtront à la lecture de la description qui suit et se réfère aux dessins l'accompagnant donnés à titre d'exemples. Les figures 1 et 2 de ces dessins sont des schémas d'installations pour la mise en oeuvre de l'invention.

L'installation de la figure 1 comporte essentiellement un appareil de cristallisation par évaporation à marche continue 10, un ballon fermé 12 et un malaxeur-refroidisseur 14.

L'appareil 10 est constitué par une cuve horizontale divisée en plusieurs compartiments par des cloisons verticales dont la hauteur est inférieure à celle de la cuve, de telle sorte que les différents compartiments communiquent entre eux par la partie supérieure de la cuve qui est reliée à une source de vide. Les compartiments communiquent aussi entre eux par des ouvertures percées dans les cloisons et permettant la circulation de la masse cuite d'une extrémité à l'autre de la cuve. Un faisceau d'éléments chauffants, tels que des tubes parcourus par de la vapeur, est placé dans la partie inférieure de la cuve, sur toute sa longueur, pour apporter des calories à la masse cuite contenue dans les compartiments. Le premier compartiment reçoit du sirop concentré et un magma d'ensemencement contenant des germes de cristallisation. Les autres compartiments reçoivent un débit dosé de sirop. La masse cuite produite est extraite de la dernière cellule au moyen d'une pompe volumétrique 16.

Le ballon 12 est relié à une source de vide, la pression à l'intérieur du ballon étant contrôlée et réglée à une valeur inférieure à celle de la pression régnant dans l'appareil 10.

Le malaxeur 14 est constitué par une cuve ouverte équipée d'un rotor muni de pales de brassage et éventuellement d'éléments, tels que des tubes ou des plaques creuses, parcourus par de l'eau froide.

La masse-cuite extraite de l'appareil 10 par la pompe 16 est introduite dans le ballon 12. Etant donné que la pression dans le ballon est inférieure à la pression dans l'appareil 10, la masse-cuite est soumise à une détente brusque en pénétrant dans le ballon et un certain volume d'eau est évaporé ce qui provoque le refroidissement de la masse-culte jusqu'à la température d'équilibre avec la pression de vapeur, compte tenu du retard ébulliométrique; l'évaporation de l'eau et la baisse de la température provoquent une augmentation du coefficient de sursaturation de la liqueur-mère. Le temps de séjour de la masse-cuite dans le ballon est très faible, de l'ordre de 1 minute ou moins.

La masse-culte est extraite du ballon, par une pompe 18 ou une colonne barométrique, et envoyée dans le malaxeur 14. Le séjour de la masse-culte dans le malaxeur permet la cristallisation d'une masse supplémentaire de sucre sur les cristaux présents.

Le tableau suivant donne un exemple chiffré de mise en oeuvre de l'invention dans le cas d'un premier jet de sucrerie :

| | BMC | RDT% | T°C | sursat. | Débit |
|---|---|---|---|---|---|
| Masse cuite sortie 10 | 91,00 | 50,00 | 86,84 | 1,030 | 100 |
| Masse cuite sortie 12 | 91,28 | 50,15 | 83,48 | 1,112 | 99,69 |
| Masse cuite sortie 14 | 91,28 | 53,00 | 82,98 | 1,030 | 99,69 |

La masse-culte produite par l'appareil 10 a un brix (BMC) de 91 et une pureté de 94,5 et contient 50 % en poids de cristaux de sucre (RDT). Le brix de la masse-cuite est maintenu volontairement à une valeur relativement basse par addition d'un débit dosé de sirop dans le dernier compartiment de l'appareil 10 pour réduire sa viscosité et favoriser les échanges thermiques. Le coefficient de sursaturation est égal à 1,030 ; d'une manière générale, il sera compris entre 1,02 et 1,05. Dans le procédé classique, le coefficient de sursaturation de la masse-cuite sortant de l'appareil de cristallisation à marche continue est au moins égal à 1,10.

En entrant dans le ballon 12, la masse-cuite est brusquement détendue de 0,27 bar - pression dans l'appareil 10 - à 0,23 bar. Cette détente provoque l'évaporation d'un certain volume d'eau - 0,31 % - et, en conséquence, une chute de la température (T) de 86,84°C à 83,48°C et une augmentation du coefficient de sursaturation de 1,030 à 1,112. La teneur en cristaux (RDT) augmente faiblement, de 50 % à 50,15 %, du fait de l'évaporation.

Dans le malaxeur 14, la chute de température, de 83,48°C à 82,98°C, permet la cristallisation d'une quantité supplémentaire de sucre et la sursaturation est ramenée à 1,03.

Au total, on réalise un gain de 3 points, de 50 % à 53 %, sur le rendement en cristaux.

Dans l'installation de la figure 2, le malaxeur 14 est divisé en deux compartiments 142 et 144 par une cloison 146. Après avoir été refroidie dans le compartiment 142 du malaxeur la masse-cuite est soutirée et envoyée par une pompe 148 dans un second ballon 120 relié à une source de vide et où règne une pression inférieure à la pression dans le ballon 12 et telle qu'elle corresponde à une température d'équilibre inférieure à celle de la masse-cuite extraite dudit compartiment, compte tenu de l'écart ébulliométrique. En entrant dans le ballon 120, la masse-cuite est soumise à une détente qui provoque une évaporation et un nouveau refroidissement jusqu'à la température d'équilibre avec la pression qui règne dans le ballon et, par conséquent, une augmentation de la sursaturation de la liqueur-mère. Le temps de séjour de la masse-cuite dans le ballon 120 est du même ordre de grandeur que celui dans le ballon 12.

La masse-cuite est extraite du ballon 120 par une colonne barométrique 150 et envoyée dans le compartiment 144 du malaxeur où elle est soumise à un refroidissement complémentaire provoquant la cristallisation d'une masse supplémentaire de sucre.

Le malaxeur pourrait comporter plus de deux compartiments et la masse-cuite serait alors soumise à une évaporation par détente entre chaque compartiment. Au lieu d'utiliser un malaxeur divisé en plusieurs compartiments, on pourrait évidemment utiliser plusieurs malaxeurs.

Le procédé de l'invention présente l'avantage d'être continu et de permettre de faire fonctionner l'appareil de cristallisation avec un brix de sortie faible, garantie d'une plus grande productivité par suite des coefficients d'échange thermique plus élevés. Il peut, par ailleurs, être exploité dans les ateliers existants, sans avoir à modifier les appareils utilisés et moyennant des investissements réduits.

Du sirop pourrait éventuellement être ajouté à la masse-cuite sortant de l'appareil 10, avant son admission dans le ballon. Le ballon pourrait être équipé d'un agitateur qui brasserait la masse-cuite.

## Revendications

1. Procédé de production en continu de cristaux de sucre à partir de sirop comportant une première étape où la cristallisation est effectuée par évaporation sous vide avec apport de chaleur et une seconde étape où la cristallisation est effectuée par refroidissement, caractérisé en ce que la masse-cuite produite au cours de la première étape a une teneur en matières sèches (BMC) et un coefficient de sursaturation inférieurs aux valeurs habituelles et est soumise à une détente brusque provoquant l'évaporation d'un certain volume d'eau et une augmentation de la sursaturation avant d'être soumise à la seconde étape de cristallisation par refroidissement.

2. Procédé selon la revendication 1, caractérisé en ce que la masse-cuite produite au cours de la première étape est envoyée dans un ballon (12) où règne un vide supérieur (pression inférieure) à celui qui règne dans l'appareil ou le compartiment de l'appareil (10) d'où est extraite la masse-cuite, et en ce que le temps de séjour de la masse-cuite dans ledit ballon est de l'ordre de 1 minute ou moins.

3. Procédé selon la revendication 1 ou 2, caractérisé en ce que l'évaporation par détente et le refroidissement de la masse-cuite sont réalisés en plusieurs étapes.

4. Installation de production en continu de cristaux de sucre à partir de sirop comportant en série un appareil (10) où la cristallisation est effectuée par évaporation et constitué par une cuve divisée en plusieurs compartiments munis d'éléments de chauffage et reliés à une source de vide, et un malaxeur-refroidisseur (14) où la cristallisation est effectuée par refroidissement, caractérisée en ce qu'elle comporte un ballon (12) dont l'entrée est reliée à la sortie de l'appareil de cristallisation (10) et dont la sortie est reliée à l'entrée du malaxeur (14) et des moyens pour maintenir dans ledit ballon une pression inférieure à la pression qui règne, en fonctionnement, dans l'appareil de cristallisation (10) ou dans le dernier compartiment de l'appareil.

5. Installation selon la revendication 4, caractérisée en ce que ledit malaxeur est divisé en au moins deux compartiments (142, 144) ou remplacé par au moins deux malaxeurs, en ce qu'elle comporte un second ballon (20) dont l'entrée est reliée à la sortie du premier compartiment (142) ou malaxeur et dont la sortie est reliée à l'entrée du second compartiment (144) ou malaxeur, et des moyens pour maintenir dans le second ballon un pression inférieure à celle régnant dans le premier ballon (12).

## Claims

1. Process for the continuous production of sugar crystals from syrup comprising a first stage in which the crystallization is carried out by vacuum evaporation with an input of heat and a second stage in which the crystallization is carried out by cooling, characterized in that the massecuite produced during the first stage has a dry substance content (BMC) and a supersaturation coefficient lower than the usual values and is subjected to a sudden pressure reduction which causes a certain volume of water to evaporate and supersaturation to increase before being subjected to the second cooling crystallization stage.

2. Process according to claim 1, characterized in that the massecuite produced during the first stage is sent into a drum (12) in which prevails a vacuum higher (pressure lower) than that prevailing in the apparatus or the apparatus (10) compartment from which the massecuite is drawn off, and in that the residence time of the massecuite in the said drum is in the order of 1 minute or less.

3. Process according to claim 1 or 2, characterized in that the massecuite pressure-reduction evaporation and cooling are carried out in several stages.

4. Plant for the continuous production of sugar crystals from syrup comprising an apparatus (10) in which the crystallization is carried out by evaporation, and consisting of a casing divided in several compartments provided with heating elements and connected to a source of vacuum, and a cooler crystallizer (14) in which the crystallization is carried out by cooling, connected in series, characterized in that it comprises a drum (12) the inlet of which is connected to the outlet of the vacuum pan (10) and the outlet of which is connected to the inlet of the crystallizer (14) and means for maintaining in the said drum a pressure lower than the pressure prevailing in the vacuum pan (10) or in its last compartment when it is in operation.

5. Plant according to claim 4, characterized in that the said crystallizer is divided in at least two compartments (142, 144) or replaced by at least two crystallizers, in that it comprises a second drum (120) the inlet of which is connected to the outlet of the first compartment (142) or crystallizer and the outlet of which is connected to the inlet of the second compartment (144) or crystallizer, and means for maintaining in the second drum a pressure lower than that which prevails in the first drum (12).

## Patentansprüche

1. Verfahren zur kontinuierlichen Erzeugung von Zuckerkristallen aus Sirup, das eine erste Stufe umfaßt, in der die Kristallisation durch Vakuumverdampfung mit Wärmezufuhr erfolgt, und eine zweite Stufe, in der die Kristallisation durch Kühlung erfolgt, dadurch gekennzeichnet, daß die während der ersten Stufe erzeugte Kochmasse einen Trockensubstanzgehalt (BMC) und eine Übersättigungszahl aufweist, die unter den herkömmlichen Werten liegen, und daß sie einer plötzlichen Entspannung ausgesetzt wird, die die Verdampfung einer gewissen Wassermenge und die Erhöhung der Übersättigung bewirkt, bevor sie der zweiten Kristallisationsstufe durch Kühlung unterworfen wird.

2. Verfahren gemäß Anspruch 1, dadurch gekennzeichnet, daß die während der ersten Stufe erzeugte Kochmasse in ein Gefäß (12) eingeleitet wird, in dem ein höheres Vakuum (niedrigerer Druck) herrscht als in dem Apparat bzw. dem Abteil des Apparates (10), aus dem die Kochmasse abgezogen wird, und daß die Verweilzeit der Kochmasse in besagtem Gefäß in der Größenordnung von einer Minute oder weniger liegt.

3. Verfahren gemäß Anspruch 1 oder 2, dadurch gekennzeichnet, daß die Entspannungsverdampfung und die Kühlung der Kochmasse in mehreren Stufen erfolgen.

4. Anlage zur kontinuierlichen Erzeugung von Zuckerkristallen aus Sirup mit - nacheinander angeordnet - einem Apparat (10), in dem die Kristallisation durch Verdampfung erfolgt, und der aus einem in mehrere mit Heizelementen versehene und an eine Vakuumquelle angeschlossene Abteile unterteilten Behälter besteht, und einer Kühlmaische (14), in der die Kristallisation durch Kühlung erfolgt, dadurch gekennzeichnet, daß sie ein Gefäß (12) umfaßt, dessen Einlauf mit dem Auslauf des Kristallisationsapparates (10) und dessen Auslauf mit dem Einlauf der Maische (14) verbunden ist, und Mittel, um in besagtem Gefäß einen Druck aufrecht zu erhalten, der niedriger ist als der Druck der während des Betriebs im Kristallisationsapparat (10) bzw. im letzten Abtei dieses Apparates herrscht.

5. Anlage gemäß Anspruch 4, dadurch gekennzeichnet, daß besagte Maische in mindestens zwei Abteile (142, 144) unterteilt ist oder durch mindestens zwei Maischen ersetzt wird, daß sie ein zweites Gefäß (120) umfaßt, dessen Einlauf mit dem Auslauf des ersten Abteils (142) bzw. der ersten Maische und dessen Auslauf mit dem zweiten Abteil (144) bzw. der zweiten Maische verbunden sind, sowie Mittel, um in dem zweiten Gefäß einen niedrigeren Druck als in dem ersten Gefäß (12) aufrecht zu erhalten.
